(19) Europäisches Patentamt
European Patent Office
Office européen des brevets

(11) EP 2 612 421 B1

(12) EUROPEAN PATENT SPECIFICATION

(45) Date of publication and mention
of the grant of the patent:
**02.10.2019 Bulletin 2019/40**

(51) Int Cl.:
***H02M 7/04*** *(2006.01)*

(21) Application number: **11822080.5**

(22) Date of filing: **24.08.2011**

(86) International application number:
**PCT/KR2011/006259**

(87) International publication number:
**WO 2012/030105 (08.03.2012 Gazette 2012/10)**

(54) **ADAPTIVE RESONANCE POWER TRANSMITTER**

ADAPTIVER RESONANZLEISTUNGSSENDER

TRANSMETTEUR ADAPTATIF DE PUISSANCE DE RÉSONANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2010 KR 20100084660**

(43) Date of publication of application:
**10.07.2013 Bulletin 2013/28**

(73) Proprietor: **Samsung Electronics Co., Ltd.
Suwon-si, Gyeonggi-do 443-742 (KR)**

(72) Inventors:
 • **CHOI, Jin Sung
  Yongin-si
  Gyeonggi-do 449-712 (KR)**
 • **KWON, Sang Wook
  Yongin-si
  Gyeonggi-do 449-712 (KR)**
 • **PARK, Yun Kwon
  Yongin-si
  Gyeonggi-do 449-712 (KR)**
 • **PARK, Eun Seok
  Yongin-si
  Gyeonggi-do 449-712 (KR)**
 • **HONG, Young Tack
  Yongin-si
  Gyeonggi-do 449-712 (KR)**

 • **RYU, Young Ho
  Yongin-si
  Gyeonggi-do 449-712 (KR)**
 • **KIM, Nam Yun
  Yongin-si
  Gyeonggi-do 449-712 (KR)**
 • **KIM, Dong Zo
  Yongin-si
  Gyeonggi-do 449-712 (KR)**
 • **KIM, Ki Young
  Yongin-si
  Gyeonggi-do 449-712 (KR)**

(74) Representative: **Jacobs, Bart
Arnold & Siedsma
Bezuidenhoutseweg 57
2594 AC The Hague (NL)**

(56) References cited:
 **WO-A2-2009/140221    WO-A2-2010/033727
 US-A- 5 013 898       US-A1- 2002 145 483
 US-A1- 2004 121 745   US-A1- 2008 067 874
 US-A1- 2009 140 946   US-A1- 2009 174 496
 US-A1- 2010 036 773   US-A1- 2010 052 431
 US-A1- 2010 052 811   US-B2- 6 571 184**

## Description

The following description relates to wireless power transmission.

Research on wireless power transmission has been conducted seeking to overcome in the inconveniences of wired power supplies and limitations in a capacity of a conventional battery in various electronic devices including portable devices.

One conventional wireless power transmission technology uses a resonance characteristic of radio frequency (RF) device. For example, a wireless power transmission system using resonance characteristics may include a source for supplying a power, and a target for receiving a supplied power. The source may include a power amplifier. The power amplifier may amplify a source power as much as power required by the target. When the power level required by the target is changed, the power amplifier may amplify the power based on the changed power level.

WO 2010/033727 A2 relates generally to wireless charging, and more specifically to devices, systems, and methods related to portable wireless charging systems.

US 2009/174496 A1 relates to a circuit for adaptive matching of a load impedance to a predetermined load-line impedance of a load-line connected to a power amplifier output, and to a method of adaptive matching of a load impedance to a predetermined load-line impedance at a power amplifier output.

US 2004/121745 A1 relates generally to impedance matching to amplifiers, and more particularly to an impedance matching circuit and method for matching an output impedance of an amplifier circuit in a wireless communications system to an input impedance of a transmission circuit.

The present invention provides an adaptive resonance power transmitter according to claim 1 and a corresponding method according to claim 7. Preferred embodiments are defined in dependent claims.

FIG. 1 is a diagram illustrating a wireless power transmission system.

FIG. 2 is a diagram illustrating an operation load of a power amplifier in a resonance power transmitter in conventional art.

FIG. 3 is a diagram illustrating an example of a Smith chart when a matching circuit is used in the resonance power transmitter of FIG. 2 in conventional art.

FIG. 4 is a block diagram illustrating an adaptive resonance power transmitter.

FIG. 5 is a diagram illustrating an equivalent circuit of an offset line.

FIG. 6 is a diagram illustrating an example of a Smith chart when a matching circuit is used.

FIG. 7 is a diagram illustrating characteristics of an offset line and characteristics of an equivalent circuit.

FIGS. 8a and 8b are diagrams illustrating efficiency and an output level of a power amplifier in an adaptive resonance power transmitter.

FIG. 9 is a two-dimensional (2D) illustration of a resonator structure.

FIG. 10 is a three-dimensional (3D) illustration of a resonator structure.

FIG. 11 illustrates a resonator for a wireless power transmission configured as a bulky type.

FIG. 12 illustrates a resonator for a wireless power transmission configured as a hollow type.

FIG. 13 illustrates a resonator for a wireless power transmission using a parallel-sheet configuration.

FIG. 14 illustrates a resonator for a wireless power transmission including a distributed capacitor.

FIG. 15a illustrates a matcher used in the resonator of FIG. 9, and FIG. 15b illustrates an example of a matcher used in the resonator of FIG. 10.

FIG. 16 is a diagram illustrating one equivalent circuit of the resonator for a wireless power transmission of FIG. 9.

Throughout the drawings and the detailed description, unless otherwise described, the same drawing reference numerals will be understood to refer to the same elements, features, and structures. The relative size and depiction of these elements may be exaggerated for clarity, illustration, and convenience.

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing operations described is an example; however, the sequence of operations is not limited to that set forth herein and may be changed as is known in the art, with the exception of operations necessarily occurring in a certain order. Also, description of well-known functions and constructions may be omitted for increased clarity and conciseness.

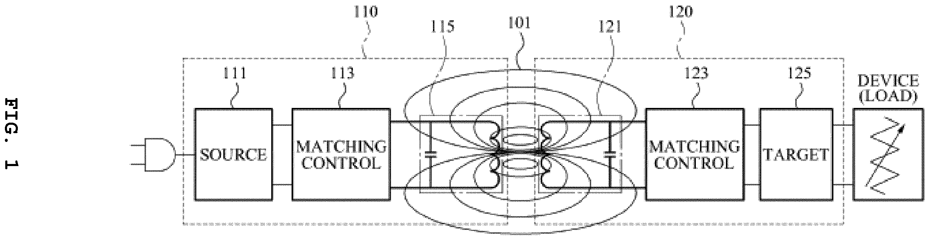

FIG. 1 illustrates a wireless power transmission system.

According to one or more embodiments, wireless power transmitted using the wireless power transmission system may be resonance power. As shown, the wireless power transmission system may have a source-target structure including a source and a target. For example, the wireless power transmission system may include a resonance power transmitter 110 corresponding to the source and a resonance power receiver 120 corresponding to the target.

The resonance power transmitter 110 may include, for example, a source unit 111 and a source resonator 115. The source unit 111 may receive energy from an external voltage supplier to generate a resonance power. The resonance power transmitter 110 may further include a matching control 113 to perform functions such as, for example, resonance frequency or impedance matching.

The source unit 111 may include an alternating current (AC)-to-AC (AC/AC) converter, an AC-to-direct current (DC) (AC/DC) converter, and/or a DC-to-AC (DC/AC) inverter. The AC/AC converter may be configured to adjust, to a desired level, a signal level of an AC signal input from an external device. And the AC/DC converter may output a DC voltage at a predetermined level by rectifying an AC signal output from the AC/AC converter. The DC/AC inverter may be configured to generate an AC signal (e.g., in a band of a few megahertz (MHz) to tens of MHz) by quickly switching a DC voltage output from the AC/DC converter. Of course, other AC voltage frequencies may also be used in some instances.

The matching control 113 may be configured to set a resonance bandwidth of the source resonator 115 and/or an impedance matching frequency of the source resonator 115. In some embodiments, the matching control 113 may include a source resonance bandwidth setting unit and/or a source matching frequency setting unit. The source resonance bandwidth setting unit may set the resonance bandwidth of the source resonator 115. And the source matching frequency setting unit may set the impedance matching frequency of the source resonator 115. For example, a Q-factor of the source resonator 115 may be determined based on a setting of the resonance bandwidth of the source resonator 115 or a setting of the impedance matching frequency of the source resonator 115.

The source resonator 115 may be configured to transfer electromagnetic energy to a target resonator 121. For example, the source resonator 115 may transfer the resonance power to the resonance power receiver 120 through magnetic coupling 101 with the target resonator 121. Accordingly, the source resonator 115 may be configured to resonate within the set resonance bandwidth.

As shown, the resonance power receiver 120 may include, for example, the target resonator 121, a matching control 123 to perform resonance frequency and/or impedance matching, and a target unit 125 to transfer the received resonance power to a device or a load.

The target resonator 121 may be configured to receive the electromagnetic energy from the source resonator 115. The target resonator 121 may be configured to resonate within the set resonance bandwidth.

The matching control 123 may set a resonance bandwidth of the target resonator 121 and/or an impedance matching frequency of the target resonator 121. In some embodiments, the matching control 123 may include a target resonance bandwidth setting unit and/or a target matching frequency setting unit. The target resonance bandwidth setting unit may be configured to set the resonance bandwidth of the target resonator 121. The target matching frequency setting unit may be configured to set the impedance matching frequency of the target resonator 121. For example, a Q-factor of the target resonator 121 may be determined based on a setting of the resonance bandwidth of the target resonator 121 or a setting of the impedance matching frequency of the target resonator 121.

The target unit 125 may be configured to transfer the received resonance power to the load. The target unit 125 may include, for example, an AC/DC converter and a DC/DC converter. The AC/DC converter may generate a DC signal by rectifying an AC signal transmitted from the source resonator 115 to the target resonator 121. And the DC/DC converter may supply a rated voltage to a device or the load by adjusting a signal level of the DC signal.

The source resonator 115 and the target resonator 121 may be configured, for example, in a helix coil structured resonator, a spiral coil structured resonator, a meta-structured resonator, or the like.

Referring to FIG. 1, controlling the Q-factor may include setting the resonance bandwidth of the source resonator 115 and the resonance bandwidth of the target resonator 121, and transferring the electromagnetic energy from the source resonator 115 to the target resonator 121 through magnetic coupling 101 between the source resonator 115 and the target resonator 121. The resonance bandwidth of the source resonator 115 may be set to be wider or narrower than the resonance bandwidth of the target resonator 121 in some instances. For example, an unbalanced relationship between a BW-factor of the source resonator 115 and a BW-factor of the target resonator 121 may be maintained by setting the resonance bandwidth of the source resonator 115 to be wider or narrower than the resonance bandwidth of the target resonator 121.

For wireless power transmission employing a resonance scheme, the resonance bandwidth may be an important factor. When the Q-factor, (e.g., considering a change in a distance between the source resonator 115 and the target resonator 121, a change in the resonance impedance, impedance mismatching, a reflected signal, and/or the like) is represented by $Q_t$, $Q_t$ may have an inverse-proportional relationship with the resonance bandwidth, as given by Equation 1.

$$\frac{\triangle f}{f_0} = \frac{1}{Qt}$$

$$= \Gamma_{S,D} + \frac{1}{BW_S} + \frac{1}{BW_D}$$

[Equation 1]

In Equation 1, $f_0$ denotes a central frequency, $\Delta f$ denotes a change in a bandwidth, $\Gamma_{S,D}$ denotes a reflection loss between the source resonator 115 and the target resonator 121, $BW_S$ denotes the resonance bandwidth of the source resonator 115, and $BW_D$ denotes the resonance bandwidth of the target resonator 121. In Equation 1, the BW-factor may indicate either $1/BW_S$ or $1/BW_D$.

Due to an external effect, for example, a change in the distance between the source resonator 115 and the target resonator 121, a change in a location of the source resonator 115 and/or the target resonator 121, and/or the like, impedance mismatching between the source resonator 115 and the target resonator 121 may occur. The impedance mismatching may be a direct cause in decreasing an efficiency of power transfer. When a reflected wave corresponding to a transmission signal is partially reflected and returned is detected, the matching control 113 may be configured to determine that impedance mismatching has occurred, and may perform impedance matching. For example, the matching control 113 may change a resonance frequency by detecting a resonance point through a waveform analysis of the reflected wave. The matching control 113 may determine, as the resonance frequency, a frequency having the minimum amplitude in the waveform of the reflected wave.

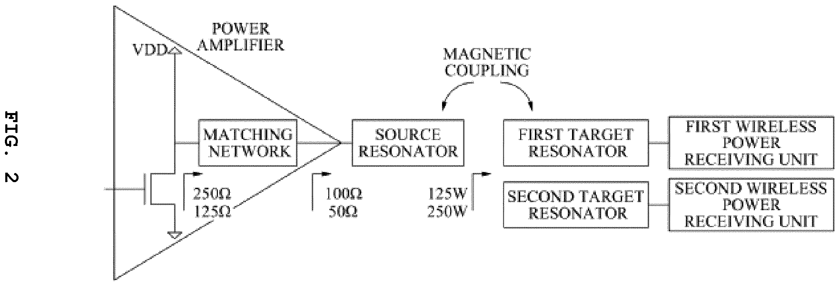

FIG. 2 illustrates an operation load of a power amplifier in a conventional resonance power transmitter.

A source resonator may transmit a resonance power through magnetic coupling with a first target resonator and a second target resonator. Here, the power amplifier may include a matching network. The matching network may be designed so that the power amplifier may be operated, suitable for a characteristic of a reference load, for example, 50 ohms ($\Omega$).

More specifically, when a load characteristic in front of the source resonator corresponds to 50 $\Omega$, the matching network may be designed so that the power amplifier may controlled so as to be optimized to be most the efficiently operated. And when a load characteristic in front of the source resonator corresponds to values other than 50 $\Omega$, the load may be adjusted to 50 $\Omega$ by a separate controller, so that the power amplifier may be efficiently operated. In some instances, a separate controller may be provided so that the power amplifier may be efficiently operated when a load characteristic of the source resonator is changed.

For example, when the source resonator transmits a resonance power to only the first target resonator in response to a control signal of a first wireless power receiving unit, a power level required by the first wireless power receiving unit may be changed from 250 watt (W) to 125 W. In this example, the load characteristic of the source resonator may be changed from 50 $\Omega$ to 100 $\Omega$. When the load characteristic of the source resonator is changed, the operation load of the power amplifier may need to be changed from 125 $\Omega$ to 250 $\Omega$, so that the power amplifier may amplify a resonance power of 125 W. However, when there is no separate controller, the operation load of the power amplifier may not be changed from 125 $\Omega$ to 250 $\Omega$ based on the change in the load characteristic of the source resonator. When a separate controller is added, a power loss may additionally occur, and as a result an efficiency of a wireless power transmission system may be reduced.

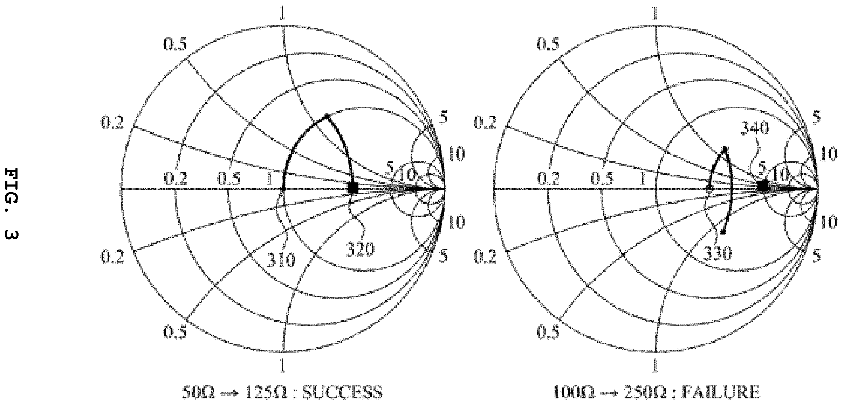

FIG. 3 illustrates an example of a Smith chart when a matching circuit is used in the resonance power transmitter of FIG. 2.

The Smith chart illustrated in FIG. 3 shows whether a characteristic of the operation load of the power amplifier is changed based on the change in the load characteristic of the source resonator when the matching circuit is used between the matching network and the source resonator. The Smith chart may be a method used to show whether impedance matching is performed in a radio frequency (RF) system.

Referring to FIG. 3, since the matching network is designed so that the power amplifier is operated when the load of the source resonator corresponds to 50 $\Omega$, the operation load of the power amplifier may be stably changed to 125 $\Omega$. In other words, since 50 $\Omega$ is set as a reference load of the source resonator, a center point 310 of the Smith chart may indicate 50 $\Omega$. An impedance may be stably matched from the center point 310 to a point 320 corresponding to the operation load of the power amplifier. Conversely, when the load of the source resonator is changed to 100 $\Omega$, the impedance may be unmatched from a start point 330 of the Smith chart to a point 340 corresponding to another operation load of the power amplifier. As such, a separate controller for impedance matching may be required.

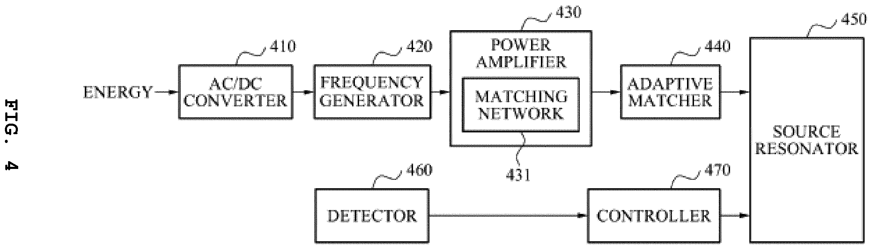

FIG. 4 illustrates an adaptive resonance power transmitter.

According to one or more embodiments, the adaptive resonance power transmitter may enable an operation load of a power amplifier to be matched without a separate controller, when a load characteristic of a source resonator is changed. As used herein, the term "load characteristic" may include an impedance characteristic.

As shown, the adaptive resonance power transmitter may include an AC/DC converter 410, a frequency generator 420, a power amplifier 430, an adaptive matcher 440, a source resonator 450, a detector 460, and a controller 470.

The AC/DC converter 410 may be configured to convert AC energy to DC energy or to DC current. For example, AC energy may be supplied from a power supply.

The frequency generator 420 may be configured to generate a desired frequency (for example, a resonance frequency) based on the DC energy or the DC current, and may generate a current having the desired frequency. The current having the desired frequency may be amplified by the power amplifier 430.

The power amplifier 430 may include a matching network 431 configured to match an impedance of the power amplifier 430 to a predetermined impedance. The matching network 431 may enable the power amplifier 430 to be matched to a reference load of the source resonator 450, for example, 50 Ω. In some embodiments, the matching network 431 may include a corresponding apparatus provided in the power amplifier 430. Additionally, the power amplifier 430 may be configured to amplify source power, in response to a change in a power required by a resonance power receiver. The power amplifier 430 may amplify the source power to reach a power level required by the resonance power receiver, based on the operation lode of the power amplifier 430 that is changed by the adaptive matcher 440.

The adaptive matcher 440 may be configured to adaptively match an impedance of the matching network 431 with an impedance of the source resonator 450, based on the power level required by the resonance power receiver. The adaptive matcher 440 may be positioned between the matching network 431 and the source resonator 450, for instance. When the impedance of the source resonator 450 is changed based on a change in the power level required by the resonance power receiver, the adaptive matcher 440 may adaptively perform impedance matching between the matching network 431 and the source resonator 450. For example, the power amplifier 430 may be designed suitable for the reference load, and the adaptive matcher 440 may convert the operation load of the power amplifier 430, to be matched to the change in the impedance of the source resonator 450.

In some embodiments, the adaptive matcher 440 may have a linear characteristic. Accordingly, when the impedance of the source resonator 450 is changed, the adaptive matcher 440 may enable the operation load of the power amplifier 430 linearly to be matched to the impedance of the source resonator 450 within a preset range. For example, the adaptive matcher 440 may be an offset line having a linear value between 50 Ω and 100 Ω. The offset line may have a linear impedance value in a preset range, for instance. The offset line may be determined based on a range where the impedance of the source resonator 450 is changeable. Additionally, the offset line may have the same characteristic as the impedance of the source resonator 450.

The adaptive matcher 440 may include a matching circuit including at least one inductor and at least one capacitor so that the matching circuit has a linear impedance value in a preset range. Since the offset line may have a linear predetermined impedance value, the offset line may include an equivalent circuit corresponding to the predetermined impedance. The equivalent circuit having the predetermined impedance may be implemented by an inductor and a capacitor, for instance.

The adaptive matcher 440 may include a phase determination unit to determine a phase used to adaptively match the impedance of the matching network 431 with the impedance of the source resonator 450. When an offset line is used as the adaptive matcher 440, whether matching is performed may be determined based on a phase characteristic of the offset line. The phase determination unit may determine a phase of the offset line so that the impedance of the matching network 431 may be matched with the impedance of the source resonator 450. When a resonance frequency is low and when a phase is high, a physical length of the offset line for adaptive matching may be lengthened. When the length of the offset line is increased, it may be difficult to actually use the offset line. Accordingly, the offset line may include an LC equivalent circuit having the same characteristic as the offset line in the resonance frequency. For example, the LC equivalent circuit may include an inductor and a capacitor.

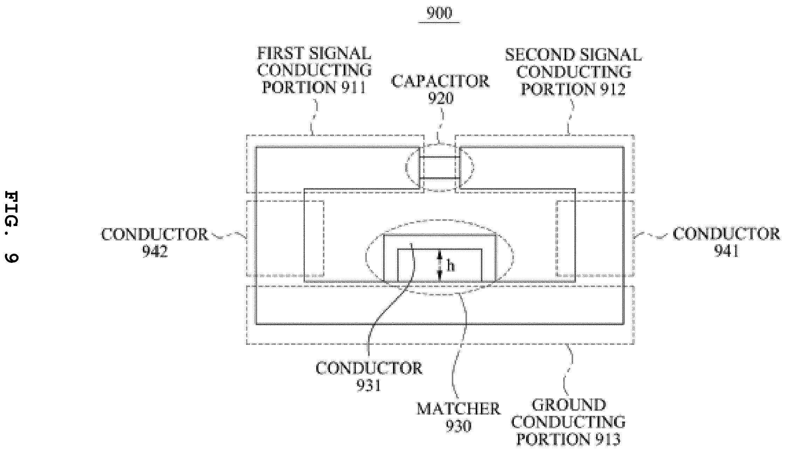

The source resonator 450 may be configured to transmit a resonance power to the resonance power receiver, for example, through a magnetic coupling. The source resonator 450 may include one or more resonators configured as illustrated in FIGS. 9 through 16 in some embodiments. For example, the resonance power may be wirelessly transmitted by a wave propagated by the source resonator 450. The load characteristic of the source resonator 450 may be changed based on the power level required by the resonance power receiver.

The detector 460 may be configured to detect a signal including information regarding the required power level from the resonance power receiver. For example, the information regarding the required power level may include, for example, a distance between the source resonator 450 and a target resonator of the resonance power receiver, a reflection coefficient of a wave transmitted from the source resonator 450 to the target resonator, a power transmission gain between the source resonator 450 and the target resonator, a coupling efficiency between the source resonator 450 and the target resonator, and/or the like. The detector 460 may detect information used to change the impedance of the source resonator 450 based on the change in the required power level.

The controller 470 may be configured to generate a control signal to adjust the impedance of the source resonator 450, or to adjust the frequency generated by the frequency generator 420, based on the distance, the reflection coefficient, the power transmission gain, the coupling efficiency, a change in a number of targets, a change in a power consumption of a target, and/or the like.

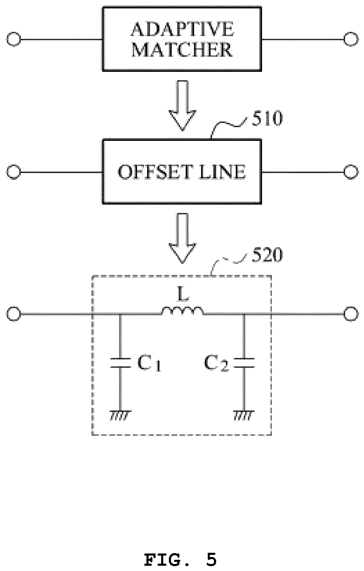

FIG. 5 illustrates an equivalent circuit of an offset line.

As shown, the adaptive matcher 440 of FIG. 4 may correspond to an offset line 510. The offset line 510 may be positioned between the matching network 431 and the source resonator 450 of FIG. 4. The offset line 510 may have a load having the same characteristic as the reference load of the source resonator 450 (for example, 50 Ω). Accordingly, when a load of the source resonator 450 is changed, a desired matching effect may be obtained. In other words, the offset line 510 may match the impedance of the matching network 431 of FIG. 4 with the impedance of the source resonator 450, and the power amplifier 430 of FIG. 4 may amplify the resonance power to reach the power level required by the resonance power receiver.

Additionally, when using a low resonance frequency and a high phase, a physical length of the offset line 510 may be lengthened, since the offset line 510 is sensitive to a phase characteristic. Accordingly, in some embodiments, the offset line 510 may include an LC equivalent circuit 520 that has the same impedance characteristic as that of the offset line 510. The LC equivalent circuit 520 may include an inductor L, and capacitors $C_1$, and $C_2$.

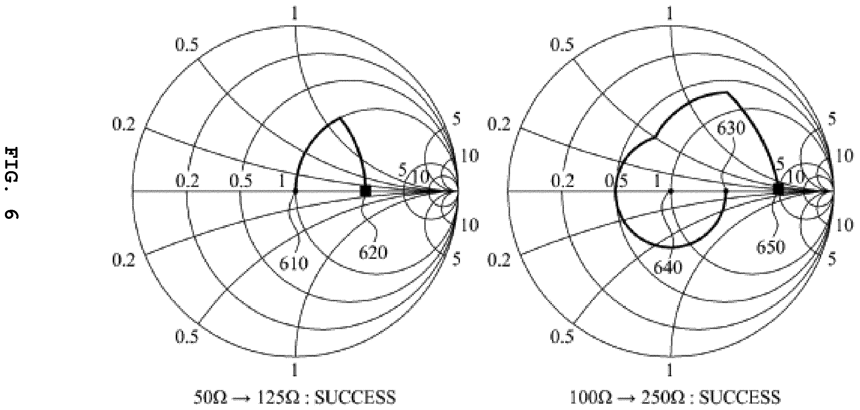

FIG. 6 illustrates an example of a Smith chart when a matching circuit is used.

The Smith chart illustrated in FIG. 6 shows whether a characteristic of an operation load of a power amplifier is changed based on a change in a load characteristic of a source resonator when the matching circuit is used between a matching network and the source resonator.

Referring to FIG. 6, an offset line may have the same load as a reference load of the source resonator, for example 50 Ω. For example, when the load of the source resonator corresponds to 50 Ω, an impedance may be stably matched from a center point 610 of the Smith chart to a point 620 corresponding to the operation load of the power amplifier, as shown in FIG. 6. When the load of the source resonator is changed to 100 Ω, a circle may be drawn from a start point 630 of the Smith chart based on a center point 640 of the Smith chart by an offset line having the load of 50Ω. For example, a trace moving based on the phase characteristic of the offset line may be determined. When the phase of the offset line is determined so as to match an impedance to 250 Ω, the impedance may be matched from the load of source resonator to a point 650 corresponding to another operation load of the power amplifier.

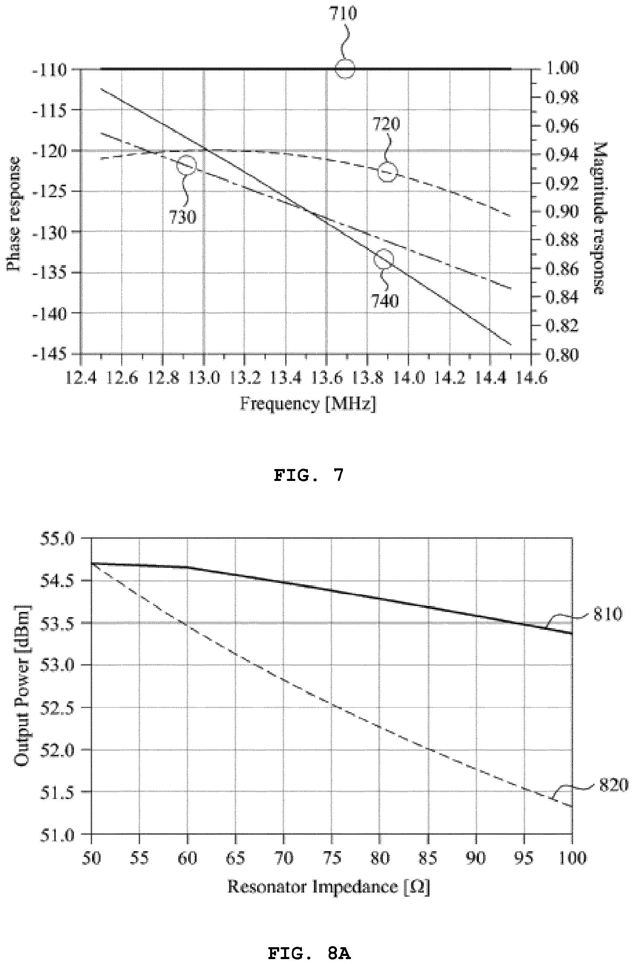

FIG. 7 illustrates characteristics of an offset line and characteristics of an LC equivalent circuit. The plot shown in FIG. 7 illustrates a magnitude and phase of the offset line and a magnitude and phase of the LC equivalent circuit. In resonance frequency, an LC equivalent circuit having the same characteristic as an offset line may be used. The magnitude of the offset line 710 and the magnitude of the LC equivalent circuit 720 may remain unchanged, regardless of a change in a frequency. The phase of the offset line 730 may have a linearly similar value to the phase of the LC equivalent circuit 740, based on the change in the frequency. Accordingly, when a resonance frequency is low, and when an offset line has a high phase, an LC equivalent circuit may be used to match an impedance of a matching network with an impedance of a source resonator.

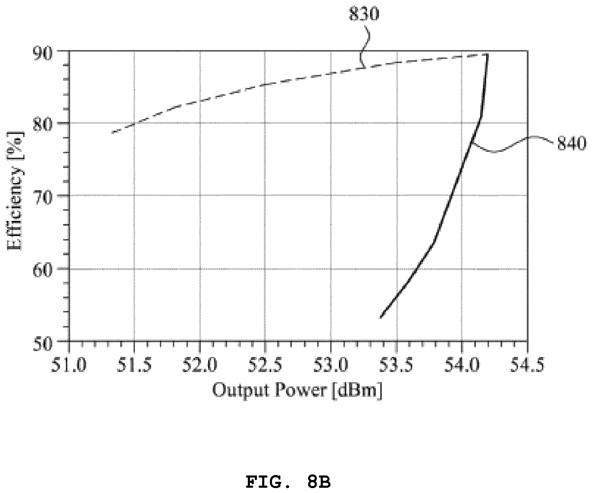

FIGS. 8a and 8b illustrate examples of an output level and an efficiency of a power amplifier in an adaptive resonance power transmitter. FIG. 8a illustrates an output power level of the power amplifier when a load of a source resonator is changed. FIG. 8b illustrates the efficiency of the power amplifier based on a change in the output power level of the power amplifier.

Referring to FIG. 8a, when an adaptive matcher is not positioned between a matching network and a source resonator, the output power level of the power amplifier may remain unchanged even when the load of the source resonator is changed, as indicated by a line 810. In other words, the power amplifier may not reach the power level required by the resonance power receiver. Additionally, when the adaptive matcher is positioned between the matching network and the source resonator, the output power level of the power amplifier may be linearly changed based on a change in the load of the source resonator, as indicated by a line 820. In other words, the power amplifier may amplify a resonance power to reach the power level required by the resonance power receiver.

Referring to FIG. 8b, when an adaptive matcher is not positioned between a matching network and a source resonator, the power amplifier may be efficiently operated only in a predetermined reference load of the source resonator, and accordingly an efficiency may be reduced based on a change in an output power, as indicated by a line 840. Additionally, when the adaptive matcher is positioned between the matching network and the source resonator, the load of the source resonator may be changed by the adaptive matcher 440, and impedance matching may be performed between the matching network and the source resonator, and thus the efficiency may be hardly reduced even though a change in the output power, as indicated by a line 830.

In one or more embodiments, a source resonator and/or a target resonator may be configured as, for example, a helix coil structured resonator, a spiral coil structured resonator, a meta-structured resonator, or the like.

An electromagnetic characteristic of many materials found in nature is that they have a unique magnetic permeability or a unique permittivity. Most materials typically have a positive magnetic permeability or a positive permittivity. Thus, for these materials, a right hand rule may be applied to an electric field, a magnetic field, and a pointing vector and thus, the corresponding materials may be referred to as right handed materials (RHMs).

On the other hand, a material having a magnetic permeability or a permittivity which is not ordinarily found in nature or is artificially-designed (or man-made) may be referred to herein as a "metamaterial." Metamaterials may be classified into an epsilon negative (ENG) material, a mu negative (MNG) material, a double negative (DNG) material, a negative refractive index (NRI) material, a left-handed (LH) material, and the like, based on a sign of the corresponding permittivity or magnetic permeability.

One or more of the materials of the embodiments disclosed herein may be metamaterials. The magnetic permeability may indicate a ratio between a magnetic flux density occurring with respect to a predetermined magnetic field in a corresponding material and a magnetic flux density occurring with respect to the predetermined magnetic field in a vacuum state. The magnetic permeability and the permittivity, in some embodiments, may be used to determine a propagation constant of a corresponding material in a predetermined frequency or a predetermined wavelength. An electromagnetic characteristic of the corresponding material may be determined based on the magnetic permeability and the permittivity. According to an aspect, the metamaterial may be easily disposed in a resonance state without significant material size changes. This may be practical for a relatively large wavelength area or a relatively low frequency area.

FIG. 9 is a two-dimensional (2D) illustration of an example of a resonator 900.

As shown, the resonator 900 may include a transmission line, a capacitor 920, a matcher 930, and conductors 941 and 942. The transmission line may include, for instance, a first signal conducting portion 911, a second signal conducting portion 912, and a ground conducting portion 913.

The capacitor 920 may be inserted or otherwise positioned in series between the first signal conducting portion 911 and the second signal conducting portion 912, so that an electric field may be confined within the capacitor 920. In various implementations, the transmission line may include at least one conductor in an upper portion of the transmission line, and may also include at least one conductor in a lower portion of the transmission line. A current may flow through the at least one conductor disposed in the upper portion of the transmission line and the at least one conductor disposed in the lower portion of the transmission may be electrically grounded. As illustrated in FIG. 9, the resonator 900 may be configured to have a generally 2D structure. The transmission line may include the first signal conducting portion 911 and the second signal conducting portion 912 in the upper portion of the transmission line, and may include the ground conducting portion 913 in the lower portion of the transmission line. As shown, the first signal conducting portion 911 and the second signal conducting portion 912 may be disposed to face the ground conducting portion 913 with current flowing through the first signal conducting portion 911 and the second signal conducting portion 912.

In some implementations, one end of the first signal conducting portion 911 may be electrically connected (i.e., shorted) to the conductor 942, and another end of the first signal conducting portion 911 may be connected to the capacitor 920. And one end of the second signal conducting portion 912 may be grounded to the conductor 941, and another end of the second signal conducting portion 912 may be connected to the capacitor 920. Accordingly, the first signal conducting portion 911, the second signal conducting portion 912, the ground conducting portion 913, and the conductors 941 and 942 may be connected to each other, such that the resonator 900 may have an electrically "closed-loop structure." The term "closed-loop structure" as used herein, may include a polygonal structure, for example, a circular structure, a rectangular structure, or the like that is electrically closed.

The capacitor 920 may be inserted into an intermediate portion of the transmission line. For example, the capacitor 920 may be inserted into a space between the first signal conducting portion 911 and the second signal conducting portion 912. The capacitor 920 may be configured, in some instances, as a lumped element, a distributed element, or the like. In one implementation a distributed capacitor may be configured as a distributed element and may include zigzagged conductor lines and a dielectric material having a relatively high permittivity between the zigzagged conductor lines.

When the capacitor 920 is inserted into the transmission line, the resonator 900 may have a property of a metamaterial, as discussed above. For example, the resonator 900 may have a negative magnetic permeability due to the capacitance of the capacitor 920. If so, the resonator 900 may be referred to as a mu negative (MNG) resonator. Various criteria may be applied to determine the capacitance of the capacitor 920. For example, the various for enabling the resonator 900 to have the characteristic of the metamaterial may include one or more of the following: a criterion to enable the resonator 900 to have a negative magnetic permeability in a target frequency, a criterion to enable the resonator 900 to have a zeroth order resonance characteristic in the target frequency, or the like.

The resonator 900, also referred to as the MNG resonator 900, may also have a zeroth order resonance characteristic (i.e., having, as a resonance frequency, a frequency when a propagation constant is "0"). If the resonator 900 has a zeroth order resonance characteristic, the resonance frequency may be independent with respect to a physical size of the MNG resonator 900. Moreover, by appropriately designing the capacitor 920, the MNG resonator 900 may sufficiently change the resonance frequency without substantially changing the physical size of the MNG resonator 900 may not need to be changed in order to change the resonance frequency.

In a near field, for instance, the electric field may be concentrated on the capacitor 920 inserted into the transmission line. Accordingly, due to the capacitor 920, the magnetic field may become dominant in the near field. In one or more embodiments, the MNG resonator 900 may have a relatively high Q-factor using the capacitor 920 of the lumped element. Thus, it may be possible to enhance power transmission efficiency. For example, the Q-factor indicates a level of an ohmic loss or a ratio of a reactance with respect to a resistance in the wireless power transmission. The efficiency of the wireless power transmission may increase according to an increase in the Q-factor.

The MNG resonator 900 may include a matcher 930 to be used in impedance matching. For example, the matcher 930 may be configured to appropriately determine and adjust the strength of a magnetic field of the MNG resonator 900, for instance. Depending on the configuration, current may flow in the MNG resonator 900 via a connector, or may flow out from the MNG resonator 900 via the connector. The connector may be connected to the ground conducting portion 913 or the matcher 930. In some instances, power may be transferred through coupling without using a physical connection between the connector and the ground conducting portion 913 or the matcher 930.

As illustrated in FIG. 9, the matcher 930 may be positioned within the loop formed by the loop structure of the resonator 900. The matcher 930 may adjust the impedance of the resonator 900 by changing the physical shape of the matcher 930. For example, the matcher 930 may include the conductor 931 to be used in the impedance matching positioned in a location that is separate from the ground conducting portion 913 by a distance h. Accordingly, the impedance of the resonator 900 may be changed by adjusting the distance h.

In some instances, a controller may be provided to control the matcher 930 which generates and transmits a control signal to the matcher 930 directing the matched to change its physical shape so that the impedance of the resonator may be adjusted. For example, the distance h between the conductor 931 of the matcher 930 and the ground conducting portion 913 may be increased or decreased based on the control signal. The controller may generate the control signal based on various factors.

As illustrated in FIG. 9, the matcher 930 may be configured as a passive element such as the conductor 931, for example. Of course, in other embodiments, the matcher 930 may be configured as an active element such as a diode, a transistor, or the like. If the active element is included in the matcher 930, the active element may be driven based on the control signal generated by the controller, and the impedance of the resonator 900 may be adjusted based on the control signal. For example, when the active element is a diode included in the matcher 930, the impedance of the resonator 900 may be adjusted depending on whether the diode is in an ON state or in an OFF state.

In some instances, a magnetic core may be further provided to pass through the MNG resonator 900. The magnetic core may perform a function of increasing a power transmission distance.

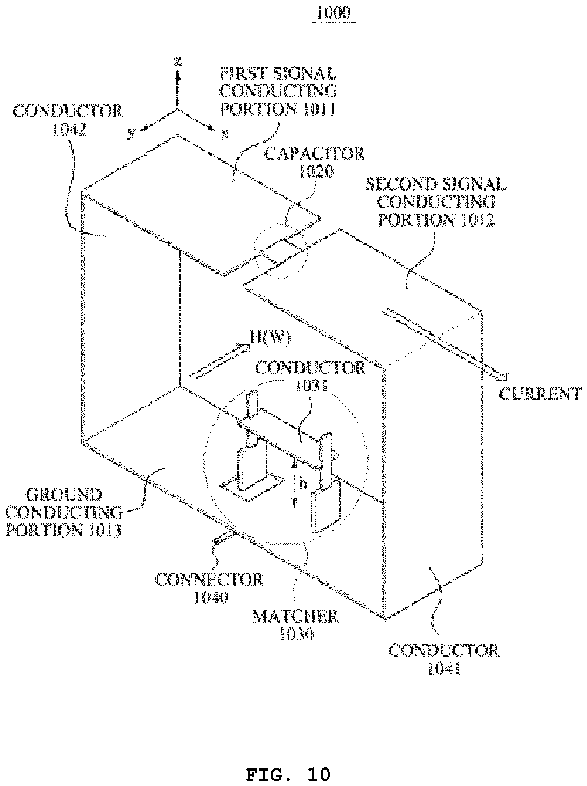

FIG. 10 is a three-dimensional (3D) illustration of a resonator 1000.

Referring to FIG. 10, the resonator 1000 may include a transmission line and a capacitor 1020. The transmission line may include a first signal conducting portion 1011, a second signal conducting portion 1012, and a ground conducting portion 1013. The capacitor 1020 may be inserted, for instance, in series between the first signal conducting portion 1011 and the second signal conducting portion 1012 of the transmission link such that an electric field may be confined within the capacitor 1020.

As illustrated in FIG. 10, the resonator 1000 may have a generally 3D structure. The transmission line may include the first signal conducting portion 1011 and the second signal conducting portion 1012 in an upper portion of the resonator 1000, and may include the ground conducting portion 1013 in a lower portion of the resonator 1000. The first signal conducting portion 1011 and the second signal conducting portion 1012 may be disposed to face the ground conducting portion 1013. In this arrangement, current may flow in an x direction through the first signal conducting portion 1011 and the second signal conducting portion 1012. Due to the current, a magnetic field H(W) may be formed in a -y direction. However, it will be appreciated that, the magnetic field H(W) might also be formed in the opposite direction (e.g., a +y direction) in other implementations.

In one or more embodiments, one end of the first signal conducting portion 1011 may be electrically connected (i.e., shorted) to the conductor 1042, and another end of the first signal conducting portion 1011 may be connected to the capacitor 1020. One end of the second signal conducting portion 1012 may be grounded to the conductor 1041, and another end of the second signal conducting portion 1012 may be connected to the capacitor 1020. Accordingly, the first signal conducting portion 1011, the second signal conducting portion 1012, the ground conducting portion 1013, and the conductors 1041 and 1042 may be connected to each other, whereby the resonator 1000 may have an electrically closed-loop structure. As illustrated in FIG. 10, the capacitor 1020 may be inserted or otherwise positioned between the first signal conducting portion 1011 and the second signal conducting portion 1012. For example, the capacitor 1020 may be inserted into a space between the first signal conducting portion 1011 and the second signal conducting portion 1012. The capacitor 1020 may include, for example, a lumped element, a distributed element, or the like. For example, a distributed capacitor having the shape of the distributed element may include zigzagged conductor lines and a dielectric material having a relatively high permittivity positioned between the zigzagged conductor lines.

When the capacitor 1020 is inserted into the transmission line, the resonator 1000 may have a property of a metamaterial, in some instances, as discussed above.

For example, when a capacitance of the capacitor inserted is a lumped element, the resonator 1000 may have the characteristic of the metamaterial. When the resonator 1000 may has a negative magnetic permeability by appropriately adjusting the capacitance of the capacitor 1020, the resonator 1000 may also be referred to as an MNG resonator. Various criteria may be applied to determine the capacitance of the capacitor 1020. For example, the various criteria may include one or more of the following: a criterion to enable the resonator 1000 to have the characteristic of the metamaterial, a criterion to enable the resonator 1000 to have a negative magnetic permeability in a target frequency, a criterion to enable the resonator 1000 to have a zeroth order resonance characteristic in the target frequency, or the like. Based on at least one criterion among the aforementioned criteria, the capacitance of the capacitor 1020 may be determined.

The resonator 1000, also referred to as the MNG resonator 1000, may have a zeroth order resonance characteristic (i.e., having, as a resonance frequency, a frequency when a propagation constant is "0"). If the resonator 1000 has a zeroth order resonance characteristic, the resonance frequency may be independent with respect to a physical size of the MNG resonator 1000. Thus, by appropriately designing the capacitor 1020, the MNG resonator 1000 may sufficiently change the resonance frequency without substantially changing the physical size of the MNG resonator 1000 may not be changed.

Referring to the MNG resonator 1000 of FIG. 10, in a near field, the electric field may be concentrated on the capacitor 1020 inserted into the transmission line. Accordingly, due to the capacitor 1020, the magnetic field may become dominant in the near field. And, since the MNG resonator 1000 having the zeroth-order resonance characteristic may have characteristics similar to a magnetic dipole, the magnetic field may become dominant in the near field. A relatively small amount of the electric field formed due to the insertion of the capacitor 1020 may be concentrated on the capacitor 1020 and thus, the magnetic field may become further dominant.

Also, the MNG resonator 1000 may include the matcher 1030 to be used in impedance matching. The matcher 1030 may be configured to appropriately adjust the strength of magnetic field of the MNG resonator 1000. The impedance of the MNG resonator 1000 may be determined by the matcher 1030. In one or more embodiments, current may flow in the MNG resonator 1000 via a connector 1040, or may flow out from the MNG resonator 1000 via the connector 1040. And the connector 1040 may be connected to the ground conducting portion 1013 or the matcher 1030.

As illustrated in FIG. 10, the matcher 1030 may be positioned within the loop formed by the loop structure of the resonator 1000. The matcher 1030 may be configured to adjust the impedance of the resonator 1000 by changing the physical shape of the matcher 1030. For example, the matcher 1030 may include the conductor 1031 to be used in the impedance matching in a location separate from the ground conducting portion 1013 by a distance h. The impedance of the resonator 1000 may be changed by adjusting the distance h.

In some implementations, a controller may be provided to control the matcher 1030. In this case, the matcher 1030 may change the physical shape of the matcher 1030 based on a control signal generated by the controller. For example, the distance h between the conductor 1031 of the matcher 1030 and the ground conducting portion 1013 may be increased or decreased based on the control signal. Accordingly, the physical shape of the matcher 1030 may be changed such that the impedance of the resonator 1000 may be adjusted. The distance h between the conductor 1031 of the matcher 1030 and the ground conducting portion 1013 may be adjusted using a variety of schemes. For example, a plurality of conductors may be included in the matcher 1030 and the distance h may be adjusted by adaptively activating one of the conductors. Alternatively or additionally, the distance h may be adjusted by adjusting the physical location of the conductor 1031 up and down. For instance, the distance h may be controlled based on the control signal of the controller. The controller may generate the control signal using various factors. As illustrated in FIG. 10, the matcher 1030 may be configured as a passive element such as the conductor 1031, for instance. Of course, in other embodiments, the matcher 1030 may be configured as an active element such as, for example, a diode, a transistor, or the like. When the active element is included in the matcher 1030, the active element may be driven based on the control signal generated by the controller, and the impedance of the resonator 1000 may be adjusted based on the control signal. For example, if the active element is a diode included in the matcher 1030, the impedance of the resonator 1000 may be adjusted depending on whether the diode is in an ON state or in an OFF state.

In some implementations, a magnetic core may be further provided to pass through the MNG resonator 1000. The magnetic core may perform a function of increasing a power transmission distance.

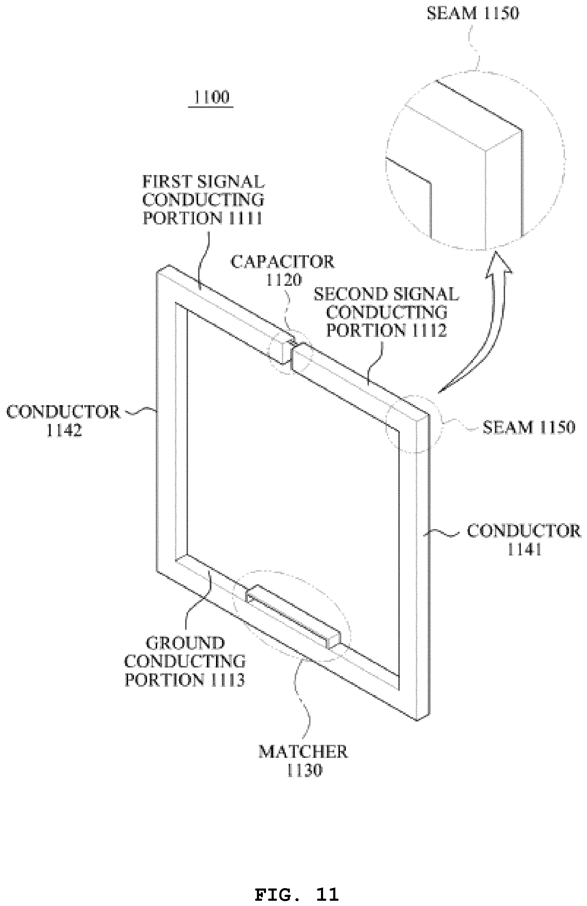

FIG. 11 illustrates a resonator 1100 for a wireless power transmission configured as a bulky type.

As used herein, the term "bulky type" may refer to a seamless connection connecting at least two parts in an integrated form.

Referring to FIG. 11, a first signal conducting portion 1111 and a conductor 1142 may be integrally formed, rather than being separately manufactured and being connected to each other. Similarly, a second signal conducting portion 1112 and a conductor 1141 may also be integrally manufactured.

When the second signal conducting portion 1112 and the conductor 1141 are separately manufactured and then are connected to each other, a loss of conduction may occur due to a seam 1150. Thus, in some implementations, the second signal conducting portion 1112 and the conductor 1141 may be connected to each other without using a separate seam (i.e., seamlessly connected to each other). Accordingly, it is possible to decrease a conductor loss caused by the seam 1150. For instance, the second signal conducting portion 1112 and a ground conducting portion 1113 may be seamlessly and integrally manufactured. Similarly, the first signal conducting portion 1111, the conductor 1142 and the ground conducting portion 1113 may be seamlessly and integrally manufactured.

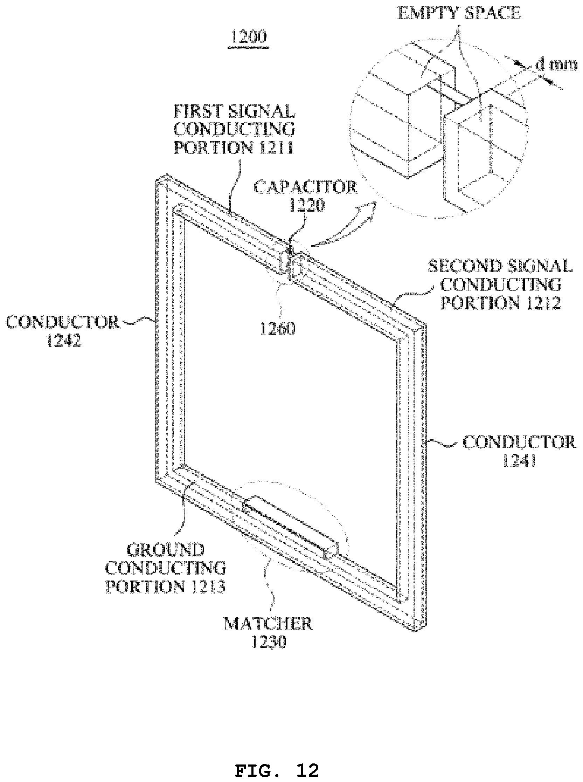

A matcher 1130 may be provided that is similarly constructed as described herein in one or more embodiments. FIG. 12 illustrates a resonator 1200 for a wireless power transmission, configured as a hollow type.

Referring to FIG. 12, each of a first signal conducting portion 1211, a second signal conducting portion 1212, a ground conducting portion 1213, and conductors 1241 and 1242 of the resonator 1200 configured as the hollow type structure. As used herein the term "hollow type" refers to a configuration that may include an empty space inside.

For a predetermined resonance frequency, an active current may be modeled to flow in only a portion of the first signal conducting portion 1211 instead of all of the first signal conducting portion 1211, a portion of the second signal conducting portion 1212 instead of all of the second signal conducting portion 1212, a portion of the ground conducting portion 1213 instead of all of the ground conducting portion 1213, and portions of the conductors 1241 and 1242 instead of all of the conductors 1241 and 1242. When a depth of each of the first signal conducting portion 1211, the second signal conducting portion 1212, the ground conducting portion 1213, and the conductors 1241 and 1242 is significantly deeper than a corresponding skin depth in the predetermined resonance frequency, such a structure may be ineffective. The significantly deeper depth, however, may increase a weight or manufacturing costs of the resonator 1200 in some instances.

Accordingly, for the predetermined resonance frequency, the depth of each of the first signal conducting portion 1211, the second signal conducting portion 1212, the ground conducting portion 1213, and the conductors 1241 and 1242 may be appropriately determined based on the corresponding skin depth of each of the first signal conducting portion 1211, the second signal conducting portion 1212, the ground conducting portion 1213, and the conductors 1241 and 1242. In an example in which each of the first signal conducting portion 1211, the second signal conducting portion 1212, the ground conducting portion 1213, and the conductors 1241 and 1242 has an appropriate depth deeper than a corresponding skin depth, the resonator 1200 may be manufactured to be lighter, and manufacturing costs of the resonator 1200 may also decrease.

For example, as illustrated in FIG. 12, the depth of the second signal conducting portion 1212 (as further illustrated in the enlarged view region 1260 indicated by a circle) may be determined as "d" mm and d may be determined

according to $d = \dfrac{1}{\sqrt{\pi f \mu \sigma}}$. Here, $f$ denotes a frequency, $\mu$ denotes a magnetic permeability, and $\sigma$

denotes a conductor constant. In one implementation, when the first signal conducting portion 1211, the second signal conducting portion 1212, the ground conducting portion 1213, and the conductors 1241 and 1242 are made of a copper and they may have a conductivity of $5.8 \times 10^7$ siemens per meter (S•m-1), the skin depth may be about 0.6 mm with respect to 10 kHz of the resonance frequency, and the skin depth may be about 0.006 mm with respect to 100 MHz of the resonance frequency. A capacitor 1220 and a matcher 1230 may be provided that are similarly constructed as described herein in one or more embodiments.

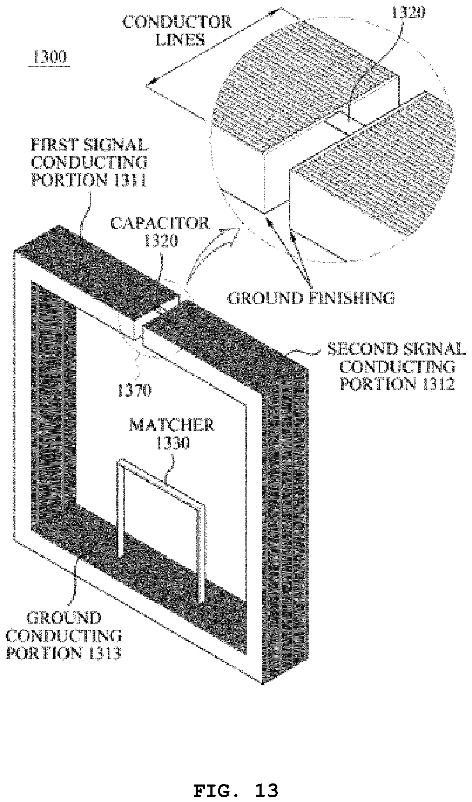

FIG. 13 illustrates a resonator 1300 for a wireless power transmission using a parallel-sheet configuration.

Referring to FIG. 13, the parallel-sheet configuration may be applicable to each of a first signal conducting portion 1311 and a second signal conducting portion 1312 included in the resonator 1300.

Each of the first signal conducting portion 1311 and the second signal conducting portion 1312 may not be a perfect conductor, and thus may have an inherent resistance. Due to this resistance, an ohmic loss may occur. The ohmic loss may decrease a Q-factor and may also decrease a coupling effect.

By applying the parallel-sheet configuration to each of the first signal conducting portion 1311 and the second signal conducting portion 1312, it may be possible to decrease the ohmic loss, and to increase the Q-factor and the coupling effect. Referring to the enlarged view portion 1370 indicated by a circle in FIG. 13, in an example in which the parallel-sheet configuration is applied, each of the first signals conducting portion 1311 and the second signal conducting portion 1312 may include a plurality of conductor lines. The plurality of conductor lines may be disposed in parallel, and may be electrically connected (i.e., shorted) at an end portion of each of the first signal conducting portion 1311 and the second signal conducting portion 1312.

When the parallel-sheet configuration is applied to each of the first signal conducting portion 1311 and the second signal conducting portion 1312, the plurality of conductor lines may be disposed in parallel. Accordingly, a sum of resistances having the conductor lines may decrease. Consequently, the resistance loss may decrease, and the Q-factor and the coupling effect may increase.

A capacitor 1320 and a matcher 1330 positioned on the ground conducting portion 1313 may be provided that are similarly constructed as described herein in one or more embodiments.

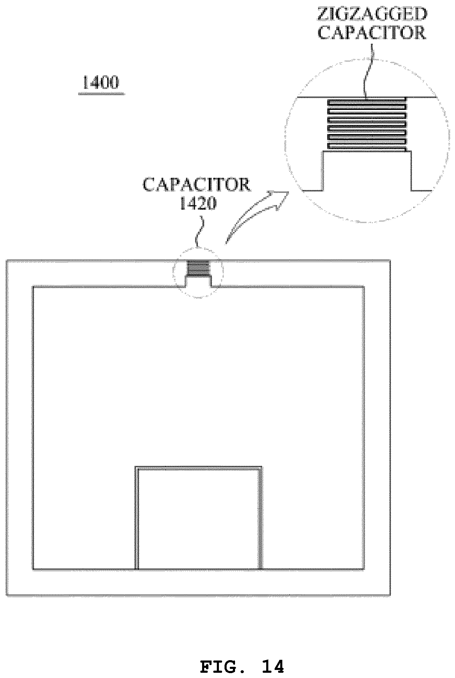

FIG. 14 illustrates a resonator 1400 for a wireless power transmission including a distributed capacitor.

Referring to FIG. 14, a capacitor 1420 included in the resonator 1400 is configured for the wireless power transmission. A capacitor used as a lumped element may have a relatively high equivalent series resistance (ESR). A variety of schemes have been proposed to decrease the ESR contained in the capacitor of the lumped element. According to an example embodiment, by using the capacitor 1120 as a distributed element, it may be possible to decrease the ESR. As will be appreciated, a loss caused by the ESR may decrease a Q-factor and a coupling effect.

As illustrated in FIG. 14, the capacitor 1420 may be configured as a conductive line having the zigzagged structure.

By employing the capacitor 1420 as the distributed element, it may be possible to decrease the loss occurring due to the ESR in some instances. In addition, by disposing a plurality of capacitors as lumped elements, it is possible to decrease the loss occurring due to the ESR. Since a resistance of each of the capacitors as the lumped elements decreases through a parallel connection, active resistances of parallel-connected capacitors as the lumped elements may also decrease, whereby the loss occurring due to the ESR may decrease. For example, by employing ten capacitors of 1 pF each instead of using a single capacitor of 10 pF, it may be possible to decrease the loss occurring due to the ESR in some instances.

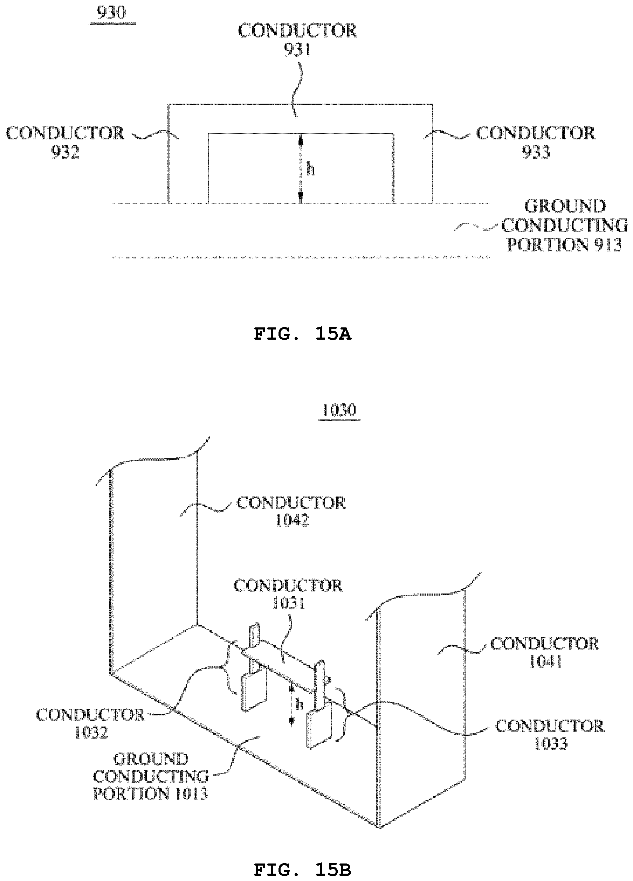

FIG. 15a illustrates the matcher 930 used in the resonator 900 illustrated in FIG. 9, and FIG. 15b illustrates an example of the matcher 1030 used in the resonator 1000 illustrated in FIG. 10.

FIG. 15a illustrates a portion of the resonator 900 of FIG. 9 including the matcher 930, and FIG. 15b illustrates a portion of the resonator 1000 of FIG. 10 including the matcher 1030.

Referring to FIG. 15a, the matcher 930 may include the conductor 931, a conductor 932, and a conductor 933. The conductors 932 and 933 may be connected to the ground conducting portion 913 and the conductor 931. The impedance of the 2D resonator may be determined based on a distance h between the conductor 931 and the ground conducting portion 913. The distance h between the conductor 931 and the ground conducting portion 913 may be controlled by the controller. The distance h between the conductor 931 and the ground conducting portion 913 can be adjusted using a variety of schemes. For example, the variety of schemes may include, for instance, one or more of the following: a scheme of adjusting the distance h by adaptively activating one of the conductors 931, 932, and 933, a scheme of adjusting the physical location of the conductor 931 up and down, or the like.

Referring to FIG. 15b, the matcher 1030 may include the conductor 1031, a conductor 1032, a conductor 1033 and conductors 1041 and 1042. The conductors 1032 and 1033 may be connected to the ground conducting portion 1013 and the conductor 1031. The impedance of the 3D resonator may be determined based on a distance h between the conductor 1031 and the ground conducting portion 1013. The distance h between the conductor 1031 and the ground conducting portion 1013 may be controlled by the controller, for example. Similar to the matcher 930 illustrated in FIG. 15a, in the matcher 1030, the distance h between the conductor 1031 and the ground conducting portion 1013 may be adjusted using a variety of schemes. For example, the variety of schemes may include, for instance, one or more of the following: a scheme of adjusting the distance h by adaptively activating one of the conductors 1031, 1032, and 1033, a scheme of adjusting the physical location of the conductor 1031 up and down, or the like.

In some implementations, the matcher may include an active element. Thus, a scheme of adjusting an impedance of a resonator using the active element may be similar to the examples described above. For example, the impedance of the resonator may be adjusted by changing a path of a current flowing through the matcher using the active element.

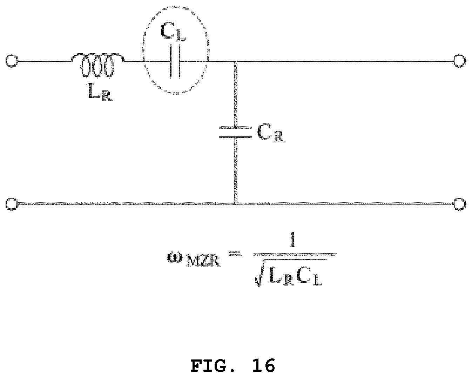

FIG. 16 illustrates one example of an equivalent circuit of the resonator 900 of FIG. 9.

The resonator 900 of FIG. 9 used in a wireless power transmission may be modeled to the equivalent circuit of FIG. 16. In the equivalent circuit depicted in FIG. 16, $L_R$ denotes an inductance of the power transmission line, $C_L$ denotes the capacitor 920 that is inserted in a form of a lumped element in the middle of the power transmission line and $C_R$ denotes a capacitance between the power transmissions and/or ground of FIG. 9.

In some instances, the resonator 900 may have a zeroth resonance characteristic. For example, when a propagation constant is "0", the resonator 900 may be assumed to have $\omega_{MZR}$ as a resonance frequency. The resonance frequency $\omega_{MZR}$ may be expressed by Equation 2.

$$\omega_{MZR} = \frac{1}{\sqrt{L_R C_L}}$$

[Equation 2]

In Equation 2, MZR denotes a Mu zero resonator.

Referring to Equation 2, the resonance frequency $\omega_{MZR}$ of the resonator 900 may be determined by $L_R/C_L$. A physical size of the resonator 900 and the resonance frequency $\omega_{MZR}$ may be independent with respect to each other. Since the physical sizes are independent with respect to each other, the physical size of the resonator 900 may be sufficiently reduced.

According to various example embodiments, an adaptive resonance power transmitter may be used in a wireless power transmission system and accordingly, it is possible to adaptively match an impedance of the adaptive resonance power transmitter in response to a change in a power level required by a resonance power receiver.

Additionally, according to various example embodiments, an offset line may be used in a generally used power amplifier and thus, it is possible to perform impedance matching in response to a change in a power level required by a resonance power receiver, without a separate control circuit.

Furthermore, according to various example embodiments, an adaptive resonance power transmitter may be used and thus, it is possible to transmit a resonance power in response to a change in a power level required by a resonance power receiver, without a separate control circuit for controlling an output power of the adaptive resonance power transmitter.

Moreover, according to various example embodiments, a resonance power transmitter may transmit a resonance power by changing an impedance characteristic of the resonance power transmitter in response to a change in a power level required by a resonance power receiver, without a separate communication between the resonance power transmitter and the resonance power receiver.

One or more of the above-described example embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa. In addition, a non-transitory computer-readable storage medium may be distributed among computer systems connected through a network and non-transitory computer-readable codes or program instructions may be stored and executed in a decentralized manner.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents.

**Claims**

1. An adaptive resonance power transmitter (110) comprising:

   a source resonator (115, 450) configured to transmit resonance power to a resonance power receiver (120), the source resonator (115, 450) having a predetermined reference impedance;
   a power amplifier (430) configured to amplify a source power to a power level used by the resonance power receiver (120), the power amplifier (340) comprising a matching network (431) configured to match an impedance of the power amplifier (430) to the reference impedance; and
   an offset line (510) connected to the matching network (431) and the source resonator (115,450),
   **characterized in that**:

   the offset line (510) comprises at least one inductor and at least one capacitor so that the offset line (510) has a linear impedance value in a preset range corresponding to an impedance characteristic of the reference impedance, and
   an impedance value of the offset line (510) is predetermined within the preset range so that the matching network (431) is allowed to match the impedance of the power amplifier (430) to a second impedance, when an impedance of the source resonator (115, 450) is changed to the second impedance, the second impedance being different from the reference impedance and within the preset range.

2. The adaptive resonance power transmitter (110) of claim 1, further comprising a phase determination unit configured to determine a phase used to match the impedance of the power amplifier (430) with the second impedance.

3. The adaptive resonance power transmitter (110) of any of the previous claims, further comprising:
   a detector (460) configured to detect a signal from the resonance power receiver (120), the signal comprising information regarding the power level.

4. The adaptive resonance power transmitter (110) of claim 3, wherein the detector (460) is configured to detect at least one of a distance between the source resonator (115, 450) and a target resonator (121) of the resonance power receiver (120), a reflection coefficient of a wave transmitted from the source resonator (115, 450) to the target resonator (121), a power transmission gain between the source resonator (115, 450) and the target resonator (121), a coupling efficiency between the source resonator (900, 1000) and the target resonator (121), or any combination thereof.

5. The adaptive resonance power transmitter (110) of any of the previous claims, further comprising:

    an alternating current (AC)-to-direct current (DC) (AC/DC) converter (410) configured to convert AC energy to DC energy; and
    a frequency generator (420) configured to generate a current having a resonance frequency, based on the DC energy.

6. The adaptive resonance power transmitter (110) of any of the previous claims, wherein the source resonator (900, 1000) transmits the resonance power to the resonance power receiver via a magnetic coupling (101).

7. An adaptive resonance power transmitting method comprising:

    transmitting resonance power, by a source resonator (115, 450), to a resonance power receiver (120), the source resonator (115, 450) having a predetermined reference impedance;
    amplifying, by a power amplifier (430), a source power to a power level used by the resonance power receiver (120); and
    matching, by a matching network (431), an impedance of the power amplifier (430) to the reference impedance; **characterized by**:

    matching, by the matching network (431), an impedance of the power amplifier (430) to a second impedance, based on an offset line (510) connected to the matching network (431) and the source resonator (115, 450), and
    wherein the offset line (510) comprises at least one inductor and at least one capacitor so that the offset line (510) has a linear impedance value in a preset range corresponding to an impedance characteristic of the reference impedance, and

    an impedance value of the offset line (510) is predetermined within the preset range so that the matching network (431) is allowed to match the impedance of the power amplifier (430) to the second impedance, when an impedance of the source resonator (115, 450) is changed to the second impedance, the second impedance being different from the reference impedance and within the preset range.

8. The adaptive resonance power transmitting method of claim 7, further comprising:
    determining a phase used to match the impedance of the power amplifier (430) with the second impedance.

9. The adaptive resonance power transmitting method of any of the claims 7-8, further comprising:
    detecting a signal from the resonance power receiver (120), the signal comprising information regarding the power level.

10. The adaptive resonance power transmitting method of claim 9, wherein the detecting comprising:
    detecting at least one of a distance between a source resonator (115, 450) and a target resonator (121) of the resonance power receiver (120), a reflection coefficient of a wave transmitted from the source resonator (115, 450) to the target resonator (121), a power transmission gain between the source resonator (900, 1000) and the target resonator (121), a coupling efficiency between the source resonator (115, 450) and the target resonator (121), or any combination thereof.

**Patentansprüche**

1. Adaptiver Resonanzleistungssender (110), der Folgendes umfasst:

einen Quellresonator (115, 450), der dazu ausgelegt ist, Resonanzleistung an einen Resonanzleistungsempfänger (120) zu senden, wobei der Quellresonator (115, 450) eine vorbestimmte Referenzimpedanz aufweist;
einen Leistungsverstärker (430), der dazu ausgelegt ist, eine Quellleistung auf einen von dem Resonanzleistungsempfänger (120) verwendeten Leistungspegel zu verstärken, wobei der Leistungsverstärker (340) ein Anpassungsnetzwerk (431) umfasst, das dazu ausgelegt ist, eine Impedanz des Leistungsverstärkers (430) auf die Referenzimpedanz anzupassen; und
eine Versatzleitung (510), die mit dem Anpassungsnetzwerk (431) und dem Quellresonator (115, 450) verbunden ist,

**dadurch gekennzeichnet, dass**:

die Versatzleitung (510) mindestens einen Induktor und mindestens einen Kondensator umfasst, so dass die Versatzleitung (510) einen linearen Impedanzwert in einem voreingestellten Bereich aufweist, der einer Impedanzcharakteristik der Referenzimpedanz entspricht, und
ein Impedanzwert der Versatzleitung (510) innerhalb des voreingestellten Bereichs vorbestimmt ist, so dass das Anpassungsnetzwerk (431) die Impedanz des Leistungsverstärkers (430) an eine zweite Impedanz anpassen kann, wenn eine Impedanz des Quellresonators (115, 450) auf die zweite Impedanz geändert wird, wobei sich die zweite Impedanz von der Referenzimpedanz unterscheidet und innerhalb des voreingestellten Bereichs liegt.

2. Adaptiver Resonanzleistungssender (110) nach Anspruch 1, der weiterhin eine Phasenbestimmungseinheit umfasst, die dazu ausgelegt ist, eine Phase zu bestimmen, welche zum Anpassen der Impedanz des Leistungsverstärkers (430) an die zweite Impedanz verwendet wird.

3. Adaptiver Resonanzleistungssender (110) nach einem der vorhergehenden Ansprüche, der weiterhin Folgendes umfasst:
einen Detektor (460), der dazu ausgelegt ist, ein von dem Resonanzleistungsempfänger (120) stammendes Signal zu erfassen, wobei das Signal Informationen bezüglich des Leistungspegels umfasst.

4. Adaptiver Resonanzleistungssender (110) nach Anspruch 3, wobei der Detektor (460) dazu ausgelegt ist, mindestens eines von Folgendem zu erfassen: einen Abstand zwischen dem Quellresonator (115, 450) und einem Zielresonator (121) des Resonanzleistungsempfängers (120), einen Reflexionskoeffizienten einer Welle, die von dem Quellresonator (115, 450) zu dem Zielresonator (121) gesendet wird, eine Leistungsübertragungsverstärkung zwischen dem Quellresonator (115, 450) und dem Zielresonator (121), eine Kopplungseffizienz zwischen dem Quellresonator (900, 1000) und dem Zielresonator (121) oder einer beliebigen Kombination davon.

5. Adaptiver Resonanzleistungssender (110) nach einem der vorhergehenden Ansprüche, der weiterhin Folgendes umfasst:

einen Wechselstrom-in-Gleichstrom-Wandler (AC/DC-Wandler) (410), der dazu ausgelegt ist, Wechselstromenergie in Gleichstromenergie umzuwandeln; und
einen Frequenzgenerator (420), der dazu ausgelegt ist, einen Strom mit einer Resonanzfrequenz basierend auf der Gleichstromenergie zu erzeugen.

6. Adaptiver Resonanzleistungssender (110) nach einem der vorhergehenden Ansprüche, wobei der Quellresonator (900, 1000) die Resonanzleistung über eine Magnetkopplung (101) an den Resonanzleistungsempfänger sendet.

7. Adaptives Resonanzleistungssendeverfahren, das Folgendes umfasst:

mittels eines Quellresonators (115, 450) Senden von Resonanzleistung an einen Resonanzleistungsempfänger (120), wobei der Quellresonator (115, 450) eine vorbestimmte Referenzimpedanz aufweist;
mittels eines Leistungsverstärkers (430) Verstärken einer Quellleistung auf einen von dem Resonanzleistungsempfänger (120) verwendeten Leistungspegel; und
mittels eines Anpassungsnetzwerks (431) Anpassen einer Impedanz des Leistungsverstärkers (430) auf die Referenzimpedanz;
**gekennzeichnet durch**:

mittels eines Anpassungsnetzwerks (431) Anpassen einer Impedanz des Leistungsverstärkers (430) an eine zweite Impedanz basierend auf einer Versatzleitung (510), die mit dem Anpassungsnetzwerk (431) und dem Quellresonator (115, 450) verbunden ist, und

wobei die Versatzleitung (510) mindestens einen Induktor und mindestens einen Kondensator umfasst, so dass die Versatzleitung (510) einen linearen Impedanzwert in einem voreingestellten Bereich aufweist, der einer Impedanzcharakteristik der Referenzimpedanz entspricht, und

wobei ein Impedanzwert der Versatzleitung (510) innerhalb des voreingestellten Bereichs vorbestimmt ist, so dass das Anpassungsnetzwerk (431) die Impedanz des Leistungsverstärkers (430) an die zweite Impedanz anpassen kann, wenn eine Impedanz des Quellresonators (115, 450) auf die zweite Impedanz geändert wird, wobei sich die zweite Impedanz von der Referenzimpedanz unterscheidet und innerhalb des voreingestellten Bereichs liegt.

8. Adaptives Resonanzleistungssendeverfahren nach Anspruch 7, das weiterhin Folgendes umfasst: Bestimmen einer Phase, die verwendet wird, um die Impedanz des Leistungsverstärkers (430) an die zweite Impedanz anzupassen.

9. Adaptives Resonanzleistungssendeverfahren nach einem der Ansprüche 7 und 8, das weiterhin Folgendes umfasst: Erfassen eines von dem Resonanzleistungsempfänger (120) stammenden Signals, wobei das Signal Informationen bezüglich des Leistungspegels umfasst.

10. Adaptives Resonanzleistungssendeverfahren nach Anspruch 9, wobei das Erfassen Folgendes umfasst: Erfassen wenigstens eines von Folgendem: einen Abstand zwischen dem Quellresonator (115, 450) und einem Zielresonator (121) des Resonanzleistungsempfängers (120), einen Reflexionskoeffizient einer Welle, die von dem Quellresonator (115, 450) zu dem Zielresonator (121) gesendet wird, eine Leistungsübertragungsverstärkung zwischen dem Quellresonator (900, 1000) und dem Zielresonator (121), eine Kopplungseffizienz zwischen dem Quellresonator (115, 450) und dem Zielresonator (121) oder einer beliebigen Kombination davon.

## Revendications

1. Transmetteur adaptatif d'énergie par résonance (110) comprenant :

un résonateur source (115, 450) conçu pour émettre de l'énergie de résonance à destination d'un récepteur d'énergie de résonance (120), le résonateur source (115, 450) présentant une impédance de référence prédéterminée,
un amplificateur de puissance (430) conçu pour amplifier une puissance source à un niveau de puissance utilisé par le récepteur d'énergie de résonance (120), l'amplificateur de puissance (340) comprenant un réseau d'adaptation (431) conçu pour adapter l'impédance de l'amplificateur de puissance (430) à l'impédance de référence, et
une ligne de décalage (510) reliée au réseau d'adaptation (431) et au résonateur source (115, 450) ;
**caractérisé en ce que** :

la ligne de décalage (510) comprend au moins un inducteur et au moins un condensateur de manière que la ligne de décalage (510) présente une valeur d'impédance linéaire appartenant à une gamme préétablie correspondant à une caractéristique propre à l'impédance de référence, et
une valeur d'impédance de la ligne de décalage (510) est prédéterminée dans la gamme préétablie de manière que le réseau d'adaptation (431) puisse adapter l'impédance de l'amplificateur de puissance (430) à une deuxième impédance lorsque l'impédance du résonateur source (115, 450) passe à la deuxième impédance, la deuxième impédance étant différente de l'impédance de référence et appartenant à la gamme préétablie.

2. Transmetteur adaptatif d'énergie par résonance (110) selon la revendication 1, comprenant en outre une unité de détermination de phase conçue pour déterminer la phase utilisée pour adapter l'impédance de l'amplificateur de puissance (430) à la deuxième impédance.

3. Transmetteur adaptatif d'énergie par résonance (110) selon l'une quelconque des revendications précédentes, comprenant en outre :
un détecteur (460) conçu pour détecter un signal provenant du récepteur d'énergie de résonance (120), le signal comprenant des informations concernant le niveau de puissance.

4. Transmetteur adaptatif d'énergie par résonance (110) selon la revendication 3, dans lequel le détecteur (460) est conçu pour détecter au moins un élément parmi : la distance entre le résonateur source (115, 450) et un résonateur cible (121) du récepteur d'énergie de résonance (120), le coefficient de réflexion d'une onde émise par le résonateur source (115, 450) à destination du résonateur cible (121), le gain d'émission de puissance entre le résonateur source (115, 450) et le résonateur cible (121), le rendement de couplage entre le résonateur source (900, 1000) et le résonateur cible (121), ou toute combinaison de ces éléments.

5. Transmetteur adaptatif d'énergie par résonance (110) selon l'une quelconque des revendications précédentes, comprenant en outre :

un convertisseur alternatif/continu (410) conçu pour convertir une énergie alternative en énergie continue, et un générateur de fréquence (420) conçu pour générer un courant présentant une fréquence de résonance, en fonction de l'énergie continue.

6. Transmetteur adaptatif d'énergie par résonance (110) selon l'une quelconque des revendications précédentes, dans lequel le résonateur source (900, 1000) émet de l'énergie de résonance à destination du récepteur d'énergie de résonance par le biais d'un couplage magnétique (101).

7. Procédé de transmission adaptative d'énergie par résonance comprenant :

l'émission d'énergie de résonance, par un résonateur source (115, 450), à destination d'un récepteur d'énergie de résonance (120), le résonateur source (115, 450) présentant une impédance de référence prédéterminée, l'amplification, par un amplificateur de puissance (430), d'une puissance source à un niveau de puissance utilisé par le récepteur d'énergie de résonance (120), et l'adaptation, par un réseau d'adaptation (431), de l'impédance de l'amplificateur de puissance (430) à l'impédance de référence ;

**caractérisé par** :

l'adaptation, par un réseau d'adaptation (431), de l'impédance de l'amplificateur de puissance (430) à une deuxième impédance, en fonction d'une ligne de décalage (510) reliée au réseau d'adaptation (431) et au résonateur source (115, 450) ;

ladite ligne de décalage (510) comprenant au moins un inducteur et au moins un condensateur de manière que la ligne de décalage (510) présente une valeur d'impédance linéaire appartenant à une gamme préétablie correspondant à une caractéristique propre à l'impédance de référence, et

une valeur d'impédance de la ligne de décalage (510) étant prédéterminée dans la gamme préétablie de manière que le réseau d'adaptation (431) puisse adapter l'impédance de l'amplificateur de puissance (430) à la deuxième impédance lorsque l'impédance du résonateur source (115, 450) passe à la deuxième impédance, la deuxième impédance étant différente de l'impédance de référence et appartenant à la gamme préétablie.

8. Procédé de transmission adaptative d'énergie par résonance selon la revendication 7, comprenant en outre : la détermination d'une phase utilisée pour adapter l'impédance de l'amplificateur de puissance (430) à la deuxième impédance.

9. Procédé de transmission adaptative d'énergie par résonance selon l'une quelconque des revendications 7 et 8, comprenant en outre : la détection d'un signal provenant du récepteur d'énergie de résonance (120), le signal comprenant des informations concernant le niveau de puissance.

10. Procédé de transmission adaptative d'énergie par résonance selon la revendication 9, dans lequel la détection comprend : la détection d'au moins un élément parmi : la distance entre un résonateur source (115, 450) et un résonateur cible (121) du récepteur d'énergie de résonance (120), le coefficient de réflexion d'une onde émise par le résonateur source (115, 450) à destination du résonateur cible (121), le gain d'émission de puissance entre le résonateur source (900, 1000) et le résonateur cible (121), le rendement de couplage entre le résonateur source (115, 450) et le résonateur cible (121), ou toute combinaison de ces éléments.

FIG. 1

FIG. 2

FIG. 3

FIG. 4

FIG. 5

FIG. 6

FIG. 7

FIG. 8A

FIG. 8B

FIG. 9

FIG. 10

FIG. 11

FIG. 12

CONDUCTOR LINES

1320

1300

FIRST SIGNAL CONDUCTING PORTION 1311

CAPACITOR 1320

GROUND FINISHING

SECOND SIGNAL CONDUCTING PORTION 1312

1370

MATCHER 1330

GROUND CONDUCTING PORTION 1313

FIG. 13

**FIG. 14**

930

CONDUCTOR
931

CONDUCTOR
932

CONDUCTOR
933

h

GROUND
CONDUCTING
PORTION 913

**FIG. 15A**

1030

CONDUCTOR
1042

CONDUCTOR
1031

CONDUCTOR
1041

CONDUCTOR
1032

CONDUCTOR
1033

GROUND
CONDUCTING
PORTION 1013

h

**FIG. 15B**

$$\omega_{MZR} = \frac{1}{\sqrt{L_R C_L}}$$

FIG. 16

**EP 2 612 421 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010033727 A2
- US 2009174496 A1
- US 2004121745 A1